# EUROPEAN PATENT APPLICATION

(11) **EP 3 133 806 A1**
(43) Date of publication of application: **22.02.2017**
(21) Application number: 16165193.0
(22) Date of filing: 14.04.2016
(51) Int. Cl.: H04N 5/232

(54) **METHOD AND DEVICE FOR GENERATING PANORAMA**

(30) Priority: 21.08.2015 CN 201510518423
(71) Applicant: Xiaomi Inc., Beijing 100085 (CN)
(72) Inventor: CHEN, Tao, Beijing 100085 (CN); TANG, Mingyong, Beijing 100085 (CN); LIU, Huayijun, Beijing 100085 (CN)
(74) Representative: Delumeau, François Guy

(57) **Abstract**

Embodiments herein relate to a method and device for generating a panorama. The method includes that: information on a working state of a camera equipment in shooting a video file is determined (S101); it is determined whether the information on the working state meets a preset condition; when the information on the working state meets the preset condition, a video clip corresponding to the information on the working state is extracted (S102); and a panorama is generated using the video clip (S103, S206, S306). With a technical solution according to an embodiment herein, a panorama may be generated using video footage meeting a panorama mode in a video file, thus bringing different visual experience to a user through the video file.

## Description

### TECHNICAL FIELD

The present disclosure generally relates to the field of photography, and in particluar to a method and device for generating a panorama.

### BACKGROUND

With development of science and technology, panorama shooting using a camera has been widely used. During photo-taking using a camera, by moving a lens freely, more scenes may be covered by the lens to gather all scenes panned across by the lens on one photo, such that more image content may be covered by one photo. A camera cannot record a video while shooting a panorama, and cannot shoot a panorama while recording a video. As a result, video recording and panorama shooting cannot be performed simultaneously, such that a user may miss good material for a panorama or for a video.

### SUMMARY

In view of this, embodiments herein provide a method and device for generating a panorama, capable of implementing video shooting and panorama shooting simultaneously, in accordance with claims which follow.

According to a first aspect, the invention relates to a method for generating a panorama includes steps as follows:
- information on a working state of a camera equipment in shooting a video file is determined;
- it is determined whether the information on the working state meets a preset condition. When the information on the working state meets the preset condition, a video clip corresponding to the information on the working state is extracted; and
- a panorama is generated using the video clip.

A video clip corresponding to information on a working state meeting a preset condition in a video file is extracted, and a panorama is generated using the video clip, such that it is no longer required to shoot a panorama in a panorama mode, allowing a panorama to be generated using video footage meeting a panorama mode in a video file, thus bringing different visual experience to a user through the video file.

In an embodiment, the information on the working state may include a speed of a horizontal movement and an angle of the horizontal movement. The information on the working state of the camera equipment in shooting the video file may be determined as follows:
- the speed of the horizontal movement of the camera equipment in shooting the video may be determined using a gyroscope;
- the angle of the horizontal movement of the camera equipment in shooting the video may be determined using a gyroscope.

In an embodiment, it may be determined whether the information on the working state meets a preset condition as follows:
- it may be determined whether the speed of the horizontal movement is smaller than a first preset threshold ;
- it may be determined whether the angle of the horizontal movement is larger than a second preset threshold; and.
- when the speed of the horizontal movement is smaller than the first preset threshold and the angle of the horizontal movement is larger than the second preset threshold, it may be determined that the information on the working state meets the preset condition.

In an embodiment, the method may further include a step as follows:
- when the speed of the horizontal movement is larger than the first preset threshold, and/or, the angle of the horizontal movement is smaller than the second preset threshold, it may be prompted that no video clip for generating the panorama can be determined in the video file.

In an embodiment, the video clip corresponding to the information on the working state may be extracted as follows:
- a starting time of a horizontal movement and an ending time of the horizontal movement may be determined.; and
- the video clip may be determined according to the starting time and the ending time. In an embodiment, the information on the working state may include a speed of a horizontal movement and an angle of the horizontal movement. The information on the working state of the camera equipment in shooting the video file may be determined as follows:
   - the speed of the horizontal movement and the angle of the horizontal movement of the camera equipment in shooting the video may be determined from a configuration file corresponding to the video file.

According to a second aspect, the invention relates to a device for generating a panorama including:
a determining module configured for: determining information on a working state of a camera equipment in shooting a video file;
a video extracting module configured for: determining whether the information on the working state determined by the determining module meets a set condition; when the information on the working state meets the preset condition, extracting a video clip corresponding to the information on the working state; and
a panorama generating module configured for: generating a panorama using the video clip extracted by the video extracting module.

The advantages and technical effects of the device herein correspond to those of the method presented above.

In an embodiment, the information on the working state may include a speed of a horizontal movement and an angle of the horizontal movement; the determining module may include:
a first determining sub-module configured for: determining, using a gyroscope, the speed of the horizontal movement of the camera equipment in shooting the video; and
a second determining sub-module configured for: determining, using a gyroscope, the angle of the horizontal movement of the camera equipment in shooting the video.

In an embodiment, the video extracting module may include:
a third determining sub-module configured for: determining whether the speed of the horizontal movement determined by the first determining sub-module is smaller than a first preset threshold;
a fourth determining sub-module configured for: determining whether the angle of the horizontal movement determined by the second determining sub-module is larger than a second preset threshold; and
a fifth determining sub-module configured for: when the third determining sub-module determines that the speed of the horizontal movement is smaller than the first preset threshold and the fourth determining sub-module determines that the angle of the horizontal movement is larger than the second preset threshold, determining that the information on the working state meets the preset condition.

In an embodiment, the device may further include:
a prompting module configured for: when the speed of the horizontal movement determined by the first determining sub-module is larger than the first preset threshold, and/or, the angle of the horizontal movement determined by the second determining sub-module is smaller than the second preset threshold, prompting that no video clip for generating the panorama can be determined in the video file.

In an embodiment, the video extracting module may include:
a sixth determining sub-module configured for: determining a starting time of a horizontal movement and an ending time of the horizontal movement; and
a seventh determining sub-module configured for: determining the video clip according to the starting time and the ending time determined by the sixth determining sub-module.

In an embodiment, the information on the working state may include a speed of a horizontal movement and an angle of the horizontal movement; the determining module may include:
an eighth determining sub-module configured for: determining, from a configuration file corresponding to the video file, the speed of the horizontal movement and the angle of the horizontal movement of the camera equipment in shooting the video.

According to a third aspect, the invention relates to a device for generating a panorama including:
a processor; and
a memory configured for storing an instruction executable by the processor,
wherein the processor is configured for:
   determining information on a working state of a camera equipment in shooting a video file;
   determining whether the information on the working state meets a preset condition; when the information on the working state meets the preset condition, extracting a video clip corresponding to the information on the working state; and
   generating a panorama using the video clip.

In one particular embodiment, the steps of the method for generating a panorama are determined by computer program instructions.

Consequently, according to a fourth aspect herein, the invention relates to a computer program for executing the steps of the method for generating a panorama as described above when this program is executed by a computer.

This program can use any programming language and take the form of source code, object code or a code intermediate between source code and object code, such as a partially compiled form, or any other desirable form.

The disclosure is further directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Note that the general description above and detailed description below are exemplary and explanatory only, and are not intended for limiting the present disclosure.

### BRIEF DESCRIPTION OF THE DRAWINGS

Accompanying drawings are incorporated in and constitute a part of this specification, illustrate embodiments consistent with the disclosure and, together with the description, serve to explain the principles of the disclosure.
Fig.1A is a flowchart of a method for generating a panorama according to an exemplary embodiment.
Fig.1B is a diagram of a scene of a method for generating a panorama according to a first exemplary embodiment.
Fig.2 is a flowchart of a method for generating a panorama according to a first exemplary embodiment.
Fig.3 is a flowchart of a method for generating a panorama according to a second exemplary embodiment.
Fig.4 is a block diagram of a device for generating a panorama according to an exemplary embodiment.
Fig.5 is a block diagram of another device for generating a panorama according to an exemplary embodiment.
Fig.6 is a block diagram applicable to a device for generating a panorama according to an exemplary embodiment.

### DETAILED DESCRIPTION

Reference will now be made in detail to exemplary embodiments, examples of which are illustrated in the accompanying drawings. In drawing-related description below, unless indicated otherwise, identical references in different drawings represent identical or like elements. Implementations in the following exemplary embodiments do not represent all implementations according to the disclosure. On the contrary, they are merely examples of devices and methods according to some aspects of the disclosure as recited in the appended claims.

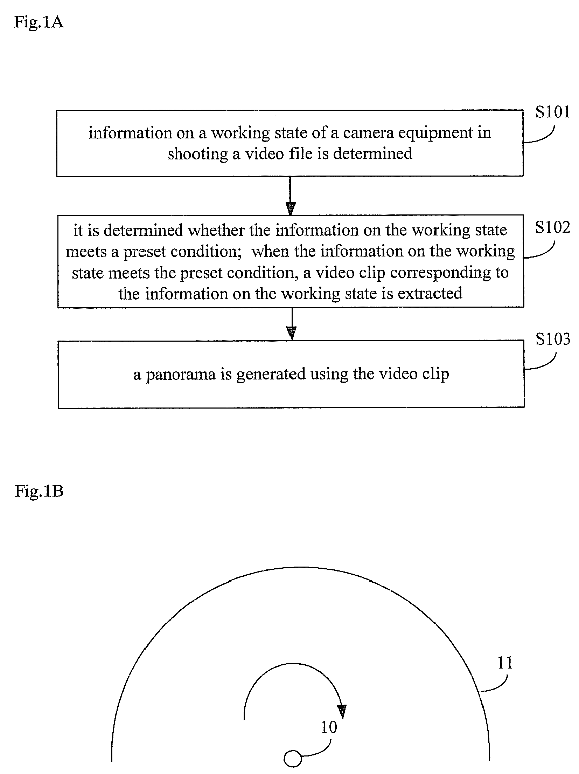

Fig.1A is a flowchart of a method for generating a panorama according to an exemplary embodiment. Fig.1B is a diagram of a scene of a method for generating a panorama according to a first exemplary embodiment. The method for generating a panorama may be applied on a terminal equipment (such as a video camera, a camera, a smart phone and a tablet computer having a camera, a desktop computer capable of playing a video file, etc.), and may be implemented by installing an application (app) or software on the terminal equipment. As shown in Fig.1A, the method for generating a panorama includes steps 101 through 103 as follows.

In step 101, information on a working state of a camera equipment in shooting a video file is determined.

In an embodiment, the information on the working state of the camera equipment in shooting the video file may be stored in the video file in a set format, or may be stored in a configuration file corresponding to the video file. The configuration file may be configured for recording the information on the working state. In an embodiment, the information on the working state may include a speed of a horizontal movement and an angle of the horizontal movement of the camera equipment in shooting.

In step 102, it is determined whether the information on the working state meets a preset condition. When the information on the working state meets the preset condition, a video clip corresponding to the information on the working state is extracted.

In an embodiment, whether the information on the working state meets the preset condition may be determined by the speed of the horizontal movement and the angle of the horizontal movement of the camera equipment in shooting the video. For example, when the speed of the horizontal movement of the camera equipment is smaller than a first preset threshold and the angle of the horizontal movement is larger than a second preset threshold, it may be determined that the video clip meets the set condition for generating a panorama.

In step 103, a panorama is generated using the video clip.

In an embodiment, the panorama may be generated using the video clip according to a method for generating a panorama in the related art, which will not be elaborated herein.

As shown in Fig.1B, reference numeral 11 shows a field of view of a video image formed on a Charge-coupled Device (CCD) of a camera equipment 10 when the camera equipment 10 shoots along a direction of an arrow as shown in Fig.1B. During the shooting, a speed of a horizontal movement and an angle of the horizontal movement of the camera equipment may be acquired using a gyroscope in the camera equipment 10. When the speed of the horizontal movement of the camera equipment 10 is smaller than a first preset threshold, it may be ensured that a panorama corresponding to a recorded video clip has a relatively high definition. When the angle of the horizontal movement of the camera equipment 10 is larger than a second preset threshold, it may be ensured that the panorama corresponding to the video clip has a relatively large field of view.

In the present embodiment, a video clip corresponding to information on a working state meeting a preset condition in a video file is extracted, and a panorama is generated using the video clip, such that it is no longer required to shoot a panorama in a panorama mode, allowing a panorama to be generated using video footage meeting a panorama mode in a video file, thus bringing different visual experience to a user through the video file.

In an embodiment, the information on the working state may include a speed of a horizontal movement and an angle of the horizontal movement. The information on the working state of the camera equipment in shooting the video file may be determined as follows.

The speed of the horizontal movement of the camera equipment in shooting the video may be determined using a gyroscope.

The angle of the horizontal movement of the camera equipment in shooting the video may be determined using a gyroscope.

In an embodiment, it may be determined whether the information on the working state meets a preset condition as follows.

It may be determined whether the speed of the horizontal movement is smaller than a first preset threshold.

It may be determined whether the angle of the horizontal movement is larger than a second preset threshold.

When the speed of the horizontal movement is smaller than the first preset threshold and the angle of the horizontal movement is larger than the second preset threshold, it may be determined that the information on the working state meets the preset condition.

In an embodiment, the method may further include a step as follows.
when the speed of the horizontal movement is larger than the first preset threshold, and/or, the angle of the horizontal movement is smaller than the second preset threshold, it may be prompted that no video clip for generating the panorama can be determined in the video file.

In an embodiment, the video clip corresponding to the information on the working state may be extracted as follows.

A starting time of a horizontal movement and an ending time of the horizontal movement may be determined.

The video clip may be determined according to the starting time and the ending time.

In an embodiment, the information on the working state may include a speed of a horizontal movement and an angle of the horizontal movement. The information on the working state of the camera equipment in shooting the video file may be determined as follows.

The speed of the horizontal movement and the angle of the horizontal movement of the camera equipment in shooting the video may be determined from a configuration file corresponding to the video file.

Please refer to subsequent embodiments for a specific method for generating the panorama using the video file.

Thus, with the method according to an embodiment herein, a panorama may be be generated using video footage meeting a panorama mode in a video file, thus bringing different visual experience to a user through the video file.

A technical solution according to an embodiment herein is described below.

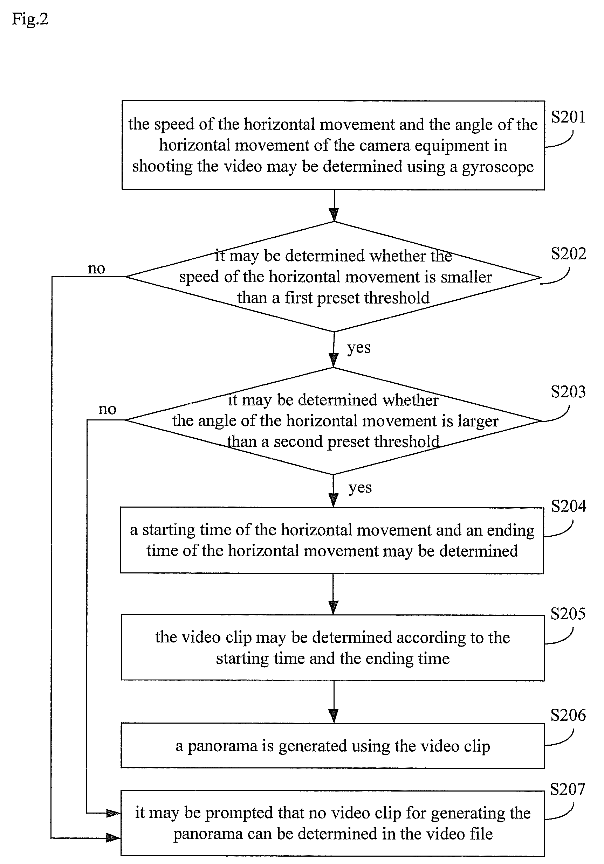

Fig.2 is a flowchart of a method for generating a panorama according to a first exemplary embodiment. The method according to the embodiment may be illustrated with reference to Fig.1B, with an example where a camera equipment generates a panorama while shooting a video file. As shown in Fig.2, the method may include steps as follows.

In step 201, the speed of the horizontal movement and the angle of the horizontal movement of the camera equipment in shooting the video may be determined using a gyroscope.

In step 202, it may be determined whether the speed of the horizontal movement is smaller than a first preset threshold. When the speed of the horizontal movement is smaller than the first preset threshold, step 203 may be performed. When the speed of the horizontal movement is larger than or equal to the first preset threshold, step 207 may be performed.

In step 203, it may be determined whether the angle of the horizontal movement is larger than a second preset threshold. When the angle of the horizontal movement is larger than the second preset threshold, step 204 may be performed. When the angle of the horizontal movement is smaller or equal to the second preset threshold, step 207 may be performed.

In an embodiment, the first preset threshold and the second preset threshold may be empirical values of the speed of the horizontal movement and the angle of the horizontal movement of the camera equipment that ensure image quality of the panorama.

In step 204, when the angle of the horizontal movement is larger than the second preset threshold, a starting time of the horizontal movement and an ending time of the horizontal movement may be determined.

In step 205, the video clip may be determined according to the starting time and the ending time.

In an embodiment, the camera equipment may record the starting time of the horizontal movement and the ending time of the horizontal movement of the camera equipment. The starting time and the ending time may be recorded in the video file in a set format.

In step 206, a panorama is generated using the video clip.

In step 207, it may be prompted that no video clip for generating the panorama can be determined in the video file.

An example of the camera equipment 10 filming is described. As shown in Fig.1B, a lens of the camera equipment 10 will shoot while moving horizontally and slowly. In addition, an art department will arrange the light and the environment in the entire shooting scene to achieve uniform illumination of the environment of the camera equipment 10 to ensure that there is an eligible video clip in a film shot by the camera equipment 10, such that a panorama generated using the video clip may serve as a poster of the film.

For example, during the filming, the camera equipment 10 may acquire, using a gyroscope, the speed of the horizontal movement and the angle of the horizontal movement of the camera equipment 10 in shooting the video. When it is detected that the speed of the horizontal movement of the camera equipment 10 is smaller than a first preset threshold and the angle of the horizontal movement of the camera equipment 10 is larger than a second preset threshold, a video clip corresponding to the horizontal movement may be marked, such that a panorama may be generated using the video clip according to the mark.

In the present embodiment, in shooting a video file, when a camera equipment detects that that a speed of a horizontal movement is smaller than a first threshold and an angle of the horizontal movement is larger than a second preset threshold, the camera equipment may generate a panorama using a video clip corresponding to the horizontal movement, such that while a video is being shot, a panorama may be generated using a video clip corresponding to good material for a panorama, implementing video shooting and panorama shooting simultaneously.

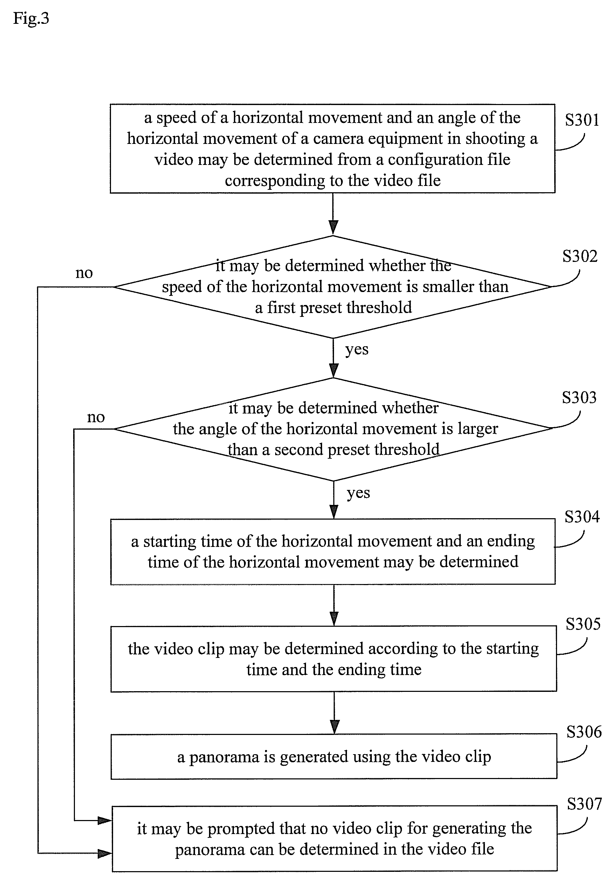

Fig.3 is a flowchart of a method for generating a panorama according to a second exemplary embodiment. The method according to the embodiment may be illustrated with an example where a camera equipment shoots a video file, and then a panorama may be generated on a terminal equipment using the video file. As shown in Fig.3, the method may include steps as follows.

In step 301, a speed of a horizontal movement and an angle of the horizontal movement of a camera equipment in shooting a video may be determined from a configuration file corresponding to the video file.

In step 302, it may be determined whether the speed of the horizontal movement is smaller than a first preset threshold. When the speed of the horizontal movement is smaller than the first preset threshold, step 303 may be performed. When speed of the horizontal movement is larger than or equal to the first preset threshold, step 307 may be performed.

In step 303, it may be determined whether the angle of the horizontal movement is larger than a second preset threshold. When the angle of the horizontal movement is larger than the second preset threshold, step 304 may be performed. When the angle of the horizontal movement is smaller than or equal to the second preset threshold, step 307 may be performed.

One may refer to description to the embodiment shown in the Fig.2 for description of the first preset threshold and the second preset threshold, which will not be repeated here.

In step 304, when the angle of the horizontal movement is larger than the second preset threshold, a starting time of the horizontal movement and an ending time of the horizontal movement may be determined.

In step 305, the video clip may be determined according to the starting time and the ending time.

In step 306, a panorama is generated using the video clip.

In step 307, it may be prompted that no video clip for generating the panorama can be determined in the video file.

An example where a terminal equipment has acquired a film shot by the camera equipment 10 is described. The terminal equipment may read, from a configuration file corresponding to a video file, a speed of a horizontal movement and an angle of the horizontal movement of the camera equipment in shooting the video. When it is detected that the speed of the horizontal movement of the camera equipment 10 is smaller than a first preset threshold and the angle of the horizontal movement of the camera equipment 10 is larger than a second preset threshold, a starting time of the horizontal movement and an ending time of the horizontal movement may be determined, and a panorama is generated using a video clip corresponding to the starting time and the ending time.

For example, a duration of the film shot by the camera equipment 10 is of 60 minutes, and the terminal equipment detects that a speed of a horizontal movement of the camera equipment 10 from the 45th minute through the 50th minute is smaller than the first preset threshold, and an angle of the horizontal movement is larger than the second preset threshold. In this case, a panorama may be generated using a video clip corresponding to the film from the 45th minute to the 50th minute.

In the present embodiment, a terminal equipment may acquire, from a configuration file of a video file, a speed of a horizontal movement and an angle of the horizontal movement of a camera equipment in shooting the video file. When it is detected that that the speed of the horizontal movement is smaller than a first preset threshold and the angle of the horizontal movement is larger than a second preset threshold, the terminal equipment may generate a panorama using a video clip corresponding to the horizontal movement, such that a panorama may be generated using a video clip of good material for a panorama in a video file, thus implementing video shooting and panorama shooting simultaneously.

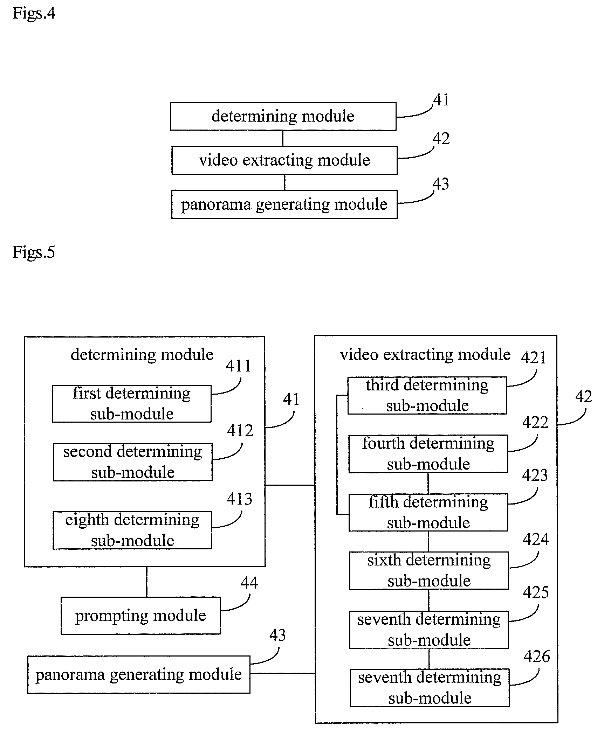

Fig.4 is a block diagram of a device for generating a panorama according to an exemplary embodiment. As shown in Fig.4, the device for generating a panorama includes:
a determining module 41 configured for: determining information on a working state of a camera equipment in shooting a video file;
a video extracting module 42 configured for: determining whether the information on the working state determined by the determining module 41 meets a set condition; when the information on the working state meets the preset condition, extracting a video clip corresponding to the information on the working state; and
a panorama generating module 43 configured for: generating a panorama using the video clip determined by the video extracting module 42.
Fig.5 is a block diagram of another device for generating a panorama according to an exemplary embodiment. As shown in Fig.5, in an embodiment, on the basis of the embodiment as shown in Fig.4, the information on the working state may include a speed of a horizontal movement and an angle of the horizontal movement. The determining module 41 may include:
   a first determining sub-module 411 configured for: determining, using a gyroscope, the speed of the horizontal movement of the camera equipment in shooting the video; and
   a second determining sub-module 412 configured for: determining, using a gyroscope, the angle of the horizontal movement of the camera equipment in shooting the video.

In an embodiment, the video extracting module 42 may include:
a third determining sub-module 421 configured for: determining whether the speed of the horizontal movement determined by the first determining sub-module 411 is smaller than a first preset threshold;
a fourth determining sub-module 422 configured for: determining whether the angle of the horizontal movement determined by the second determining sub-module 412 is larger than a second preset threshold; and
a fifth determining sub-module 423 configured for: when the third determining sub-module 421 determines that the speed of the horizontal movement is smaller than the first preset threshold and the fourth determining sub-module 422 determines that the angle of the horizontal movement is larger than the second preset threshold, determining that the information on the working state meets the preset condition.

In an embodiment, the device may further include:
a prompting module 44 configured for: when the speed of the horizontal movement determined by the first determining sub-module 411 is larger than the first preset threshold, and/or, the angle of the horizontal movement determined by the second determining sub-module 412 is smaller than the second preset threshold, prompting that no video clip for generating the panorama can be determined in the video file.

In an embodiment, the video extracting module 42 may include:
a sixth determining sub-module 424 configured for: determining a starting time of a horizontal movement and an ending time of the horizontal movement after the fifth determining sub-module 423 determines that the preset condition is met;
a seventh determining sub-module 425 configured for: determining the video clip according to the starting time and the ending time determined by the sixth determining sub-module 424.

In an embodiment, the information on the working state may include a speed of a horizontal movement and an angle of the horizontal movement; and the determining module 41 may include:
an eighth determining sub-module 413 configured for: determining, from a configuration file corresponding to the video file, the speed of the horizontal movement and the angle of the horizontal movement of the camera equipment in shooting the video.

The way in which a module of the device in the embodiment executes an operation has been elaborated in an aforementioned embodiment of the method, and will not be elaborated here.

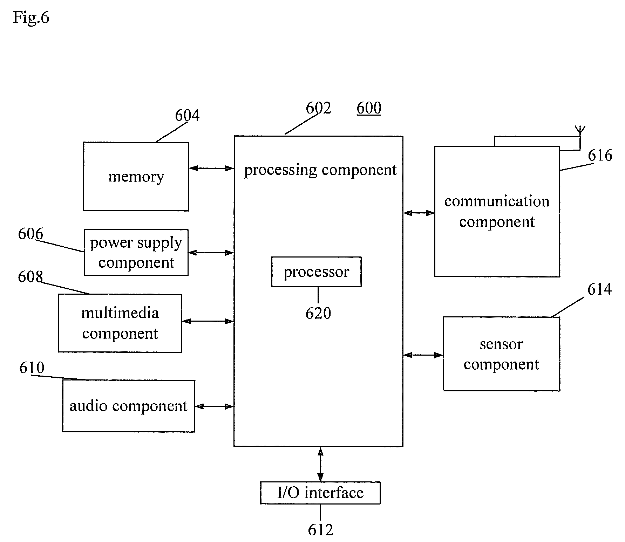

Fig.6 is a block diagram of a device for generating a panorama according to an exemplary embodiment. For example, the device 600 may be a mobile phone, a computer, a digital broadcasting terminal, a message transceiver, a game console, a tablet device, a medical device, a fitness device, a personal digital assistant, and/or the like.

Referring to Fig.6, the device 600 may include one or more components as follows: a processing component 602, a memory 604, a power supply component 606, a multimedia component 608, an audio component 610, an Input/Output (I/O) interface 612, a sensor component 614, and a communication component 616.

The processing component 602 generally controls an overall operation of the device 600, such as operations associated with display, a telephone call, data communication, a camera operation, and a recording operation. The processing component 602 may include one or more processors 620 to execute instructions so as to complete all or some steps of the method. In addition, the processing component 602 may include one or more modules to facilitate interaction between the processing component 602 and other components. For example, the processing component 602 may include a multimedia module to facilitate interaction between the multimedia component 608 and the processing component 602.

The memory 604 may be configured for storing various types of data to support the operation on the terminal 600. Example of such data may include instructions of any application or method configured for operating on the device 600, contact data, phonebook data, messages, pictures, videos, and the like. The memory 604 may be realized by any type of volatile or non-transitory storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or compact disk.

The power supply component 606 may supply electric power to various components of the device 600. The power supply component 606 may include a power management system, one or more power sources, and other components related to generating, managing and distributing electricity for the device 600.

The multimedia component 608 may include a screen providing an output interface between the device 600 and a user. In some embodiments, the screen may include a Liquid Crystal Display (LCD) and a Touch Panel (TP). If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. In some embodiments, the multimedia component 608 may include a front camera and/or a rear camera. When the device 600 is in an operation mode such as a shooting mode or a video mode, the front camera and/or the rear camera may receive external multimedia data. Each of the front camera and the rear camera may be a fixed optical lens system or may have a focal length and be capable of optical zooming.

The audio component 610 may be configured for outputting and/or inputting an audio signal. For example, the audio component 610 may include a microphone (MIC). When the device 600 is in an operation mode such as a call mode, a recording mode, and a voice recognition mode, the MIC may be configured for receiving an external audio signal. The received audio signal may be further stored in the memory 604 or may be sent via the communication component 616. In some embodiments, the audio component 610 may further include a loudspeaker configured for outputting the audio signal.

The I/O interface 612 may provide an interface between the processing component 602 and a peripheral interface module. Such a peripheral interface module may be a keypad, a click wheel, a button or the like. Such a button may include but is not limited to: a homepage button, a volume button, a start button, and a lock button.

The sensor component 614 may include one or more sensors for assessing various states of the device 600. For example, the sensor component 614 may detect an on/off state of the device 600 and relative positioning of components such as the display and the keypad of the device 600. The sensor component 614 may further detect a change in the position of the device 600 or of a component of the device 600, whether there is contact between the device 600 and a user, the orientation or acceleration/deceleration of the device 600, and a change in the temperature of the device 600. The sensor component 614 may include a proximity sensor configured for detecting existence of a nearby object without physical contact. The sensor component 614 may further include an optical sensor such as a Complementary Metal-Oxide-Semiconductor (CMOS) or Charge-Coupled-Device (CCD) image sensor used in an imaging application. In some embodiments, the sensor component 614 may further include an acceleration sensor, a gyroscope sensor, a magnetic sensor, a pressure sensor, or a temperature sensor.

The communication component 616 may be configured for facilitating wired or wireless communication between the device 600 and other equipment. The device 600 may access a wireless network based on a communication standard such as WiFi, 2G or 3G, or combination thereof. In an exemplary embodiment, the communication component 616 may receive a broadcast signal or broadcast related information from an external broadcast management system via a broadcast channel. In an exemplary embodiment, the communication component 616 may further include a Near Field Communication (NFC) module for short-range communication. For example, the NFC module may be based on Radio Frequency Identification (RFID), Infrared Data Association (IrDA), Ultra-Wideband (UWB) technology, Bluetooth (BT), and other technologies.

In an exemplary embodiment, the device 600 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components to implement the method.

In an exemplary embodiment, a non-transitory computer-readable storage medium including instructions, such as a memory 604 including instructions, may be provided. The instructions may be executed by the processor 620 of the device 600 to implement the method. For example, the non-transitory computer-readable storage medium may be a Read-Only Memory (ROM), a Compact Disc Read-Only Memory (CD-ROM), a magnetic tape, a floppy disk, optical data storage equipment, etc.

Other embodiments herein will be apparent to those skilled in the art from consideration of the specification and practice of the invention disclosed here. This application is intended to cover any variations, uses, or adaptations of the disclosure following the general principles thereof and including such departures from the present disclosure as come within known or customary practice in the art.

### INDUSTRIAL APPLICABILITY

According to an embodiment herein, a video clip corresponding to information on a working state meeting a preset condition in a video file is extracted, and a panorama is generated using the video clip, such that it is no longer required to shoot a panorama in a panorama mode, allowing a panorama to be generated using video footage meeting a panorama mode in a video file, thus bringing different visual experience to a user through the video file.

## Claims

1. A method for generating a panorama, **characterized in that** the method comprises:
determining information on a working state of a camera equipment in shooting a video file (S101);
determining whether the information on the working state meets a preset condition; when the information on the working state meets the preset condition, extracting a video clip corresponding to the information on the working state (S102); and
generating a panorama using the video clip (S103, S206, S306).

2. The method according to claim 1, wherein the information on the working state comprises a speed of a horizontal movement and an angle of the horizontal movement, and wherein the step of determining information on a working state of a camera equipment in shooting a video file comprises:
determining, using a gyroscope, the speed of the horizontal movement of the camera equipment in shooting the video (S201); and
determining, using a gyroscope, the angle of the horizontal movement of the camera equipment in shooting the video (S201).

3. The method according to claim 2, wherein the step of determining whether the information on the working state meets a preset condition comprises:
determining whether the speed of the horizontal movement is smaller than a first preset threshold (S202, S302);
determining whether the angle of the horizontal movement is larger than a second preset threshold (S203, S303); and
when the speed of the horizontal movement is smaller than the first preset threshold and the angle of the horizontal movement is larger than the second preset threshold, determining that the information on the working state meets the preset condition.

4. The method according to claim 3, further comprising:
when the speed of the horizontal movement is larger than the first preset threshold, and/or, the angle of the horizontal movement is smaller than the second preset threshold, prompting that no video clip for generating the panorama can be determined in the video file (S207, S307).

5. The method according to any one of claims 1 to 4, wherein the step of extracting a video clip corresponding to the information on the working state comprises:
determining a starting time of a horizontal movement and an ending time of the horizontal movement (S204, S304); and
determining the video clip according to the starting time and the ending time (S205, S305).

6. The method according to claim 1, wherein the information on the working state comprises a speed of a horizontal movement and an angle of the horizontal movement, and wherein the step (S101) of determining information on a working state of a camera equipment in shooting a video file comprises:
determining, from a configuration file corresponding to the video file, the speed of the horizontal movement and the angle of the horizontal movement of the camera equipment in shooting the video (S301).

7. A device for generating a panorama, **characterized in that** the device comprises:
a determining module (41) configured for: determining information on a working state of a camera equipment in shooting a video file;
a video extracting module (42) configured for: determining whether the information on the working state determined by the determining module (41) meets a set condition; when the information on the working state meets the preset condition, extracting a video clip corresponding to the information on the working state; and
a panorama generating module (43) configured for: generating a panorama using the video clip extracted by the video extracting module (42).

8. The device according to claim 7, wherein the information on the working state comprises a speed of a horizontal movement and an angle of the horizontal movement, and the determining module (41) comprises:
a first determining sub-module (411) configured for: determining, using a gyroscope, the speed of the horizontal movement of the camera equipment in shooting the video; and
a second determining sub-module (412) configured for: determining, using a gyroscope, the angle of the horizontal movement of the camera equipment in shooting the video.

9. The device according to claim 8, wherein the video extracting module (42) comprises:
a third determining sub-module (421) configured for: determining whether the speed of the horizontal movement determined by the first determining sub-module (411) is smaller than a first preset threshold;
a fourth determining sub-module (422) configured for: determining whether the angle of the horizontal movement determined by the second determining sub-module (412) is larger than a second preset threshold; and
a fifth determining sub-module (423) configured for: when the third determining sub-module (421) determines that the speed of the horizontal movement is smaller than the first preset threshold and the fourth determining sub-module (422) determines that the angle of the horizontal movement is larger than the second preset threshold, determining that the information on the working state meets the preset condition.

10. The device according to claim 9, further comprising
a prompting module (44) configured for: when the speed of the horizontal movement determined by the first determining sub-module (411) is larger than the first preset threshold, and/or, the angle of the horizontal movement determined by the second determining sub-module (412) is smaller than the second preset threshold, prompting that no video clip for generating the panorama can be determined in the video file.

11. The device according to any one of claims 7 to 10, wherein the video extracting module (42) comprises:
a sixth determining sub-module (424) configured for: determining a starting time of a horizontal movement and an ending time of the horizontal movement; and
a seventh determining sub-module (425) configured for: determining the video clip according to the starting time and the ending time determined by the sixth determining sub-module (424).

12. The device according to claim 7, wherein the information on the working state comprises a speed of a horizontal movement and an angle of the horizontal movement, and the determining module (41) comprises:
an eighth determining sub-module (413) configured for: determining, from a configuration file corresponding to the video file, the speed of the horizontal movement and the angle of the horizontal movement of the camera equipment in shooting the video.

13. A device (600) for generating a panorama, **characterized in that** the device (600) comprises:
a processor (620); and
a memory (604) configured for storing an instruction executable by the processor (620),
wherein the processor (620) is configured for:
determining information on a working state of a camera equipment in shooting a video file;
determining whether the information on the working state meets a preset condition; when the information on the working state meets the preset condition, extracting a video clip corresponding to the information on the working state; and
generating a panorama using the video clip.

14. A computer program comprising instructions for executing the steps of the method according to any one of claims 1 to 6 when said program is executed by a computer.

15. A recording medium readable by a computer and having recorded thereon a computer program comprising instructions for executing the steps of the method according to any one of claims 1 to 6.
